(19) Europäisches Patentamt / European Patent Office / Office européen des brevets

(11) **EP 2 936 127 B1**

(12) **FASCICULE DE BREVET EUROPEEN**

(45) Date de publication et mention de la délivrance du brevet:
**09.01.2019 Bulletin 2019/02**

(21) Numéro de dépôt: **13818348.8**

(22) Date de dépôt: **18.12.2013**

(51) Int Cl.:
***G01N 23/203*** (2006.01)    *G21K 1/04* (2006.01)

(86) Numéro de dépôt international:
**PCT/FR2013/053167**

(87) Numéro de publication internationale:
**WO 2014/096705 (26.06.2014 Gazette 2014/26)**

(54) **DISPOSITIF D'ÉCLAIRAGE PAR BALAYAGE, DISPOSITIF D'IMAGERIE LE COMPORTANT ET PROCÉDÉ DE MISE EN OEUVRE**

ABTASTENDE BELEUCHTUNGSVORRICHTUNG, BILDGEBUNGSVORRICHTUNG DAMIT UND VERFAHREN ZUR IMPLEMENTIERUNG

SCANNING ILLUMINATING DEVICE, IMAGING DEVICE COMPRISING SAME AND METHOD OF IMPLEMENTATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2012 FR 1262475**

(43) Date de publication de la demande:
**28.10.2015 Bulletin 2015/44**

(73) Titulaire: **Commissariat à l'Energie Atomique et aux Energies Alternatives
75015 Paris (FR)**

(72) Inventeur: **VOGLER, René
F-94400 Vitry-sur-Seine (FR)**

(74) Mandataire: **Santarelli
49, avenue des Champs-Elysées
75008 Paris (FR)**

(56) Documents cités:
**EP-A1- 2 520 927        CN-A- 1 246 647
US-A1- 2006 245 548    US-A1- 2008 142 719
US-B1- 6 434 219**

**Description**

L'invention concerne un dispositif d'éclairage par balayage, appelé modulateur de rayonnement, un dispositif d'imagerie utilisant un tel modulateur et un procédé de mise en oeuvre d'un tel modulateur.

L'imagerie consiste à éclairer un objet à l'aide d'une source de rayonnement, souvent à haute énergie, et à en former une image à partir des rayonnements rétrodiffusés (surtout en cas d'objets opaques aux rayonnements) ou transmis. Les rayonnements ici considérés sont par exemple des rayonnements pénétrant la matière, typiquement des rayonnements X, voire « gamma », mais peuvent aussi être des rayonnements dits THz, c'est-à-dire des rayonnements dont la fréquence, de l'ordre du térahertz, les situe entre l'infrarouge et le domaine des microondes. Ces notions d'éclairage ou d'imagerie n'impliquent pas du tout que le rayonnement soit dans le domaine visible (c'est généralement le contraire) ; on parle parfois d'irradiation, dans le cas de certains rayonnements pénétrants.

Il existe deux grandes familles de dispositifs d'imagerie selon la configuration d'éclairage utilisée :

- Les dispositifs « à imageur », dans lesquels la source éclaire totalement et uniformément l'objet ; la détection des rayonnements rétrodiffusés est réalisée par un imageur pixellisé de grand format associé à un système de formation d'image plus ou moins complexe,
- Les dispositifs « à balayage » dans lesquels la source éclaire une partie (en pratique une petite zone) de l'objet à un moment donné et effectue un balayage afin de couvrir, au cours d'un cycle de balayage, l'ensemble de cet objet. Une collimation est généralement placée devant la source afin de réduire à chaque instant l'amplitude angulaire du faisceau d'éclairage et donc la zone éclairée. Le rayonnement rétrodiffusé (et/ou le rayonnement transmis) est recueilli par un ou plusieurs détecteurs monodimensionnels synchronisés sur le balayage de la source.

Il existe une grande variété de dispositifs à imageur.

On connait ainsi les dispositifs à imageur virtuel (reconstitution par balayage du champ de vue d'un détecteur, en pratique monodimensionnel, fortement collimaté, dont on assure un déplacement suivant des coordonnées cartésiennes ou polaires), et les dispositifs à imageur matriciel (cet imageur matriciel est formé d'une matrice de détecteurs monodimensionnels fortement collimatés). Mis au point avant l'apparition des grandes matrices de détection, ils sont encore utilisés en scintigraphie in vitro et pour l'examen de petits animaux de laboratoires. Ces dispositifs manquent de résolution spatiale compte tenu de la taille du détecteur unitaire et de la collimation utilisés pour former l'image.

Les dispositifs à imageur se sont ensuite développés grâce à l'apparition des imageurs pixellisés ; une version particulièrement simple est l'imageur à sténopé, c'est-à-dire mettant en oeuvre un trou de faible dimension formé dans un écran interposé entre l'objet éclairé et le détecteur ; la résolution spatiale augmente lorsque la taille du trou diminue de sorte que le principal inconvénient de ce type d'imageur est qu'une augmentation de la résolution spatiale implique une diminution de la quantité de rayonnement transmise par le sténopé ; cela conduit soit à des temps de pose très longs, soit à des images de mauvais rapport signal sur bruit.

Afin d'améliorer le rapport signal sur bruit, il est possible d'utiliser la technique d'imagerie à pénombre, dans laquelle le sténopé est remplacé par une ouverture de plus grande dimension (en forme de disque, ou en anneau, par exemples). La quantité de rayonnement reçue par le détecteur est plus importante mais l'image est floue et doit être déconvoluée par un traitement mathématique utilisant la connaissance de la forme de l'ouverture et de la géométrie de détection pour déterminer le noyau de déconvolution.

Une deuxième façon de contourner les limitations du principe à sténopé est la technique à ouverture codée, consistant à multiplier les sténopés au sein d'un même écran, aussi appelé masque ; la quantité de rayonnement atteignant le détecteur augmente avec le nombre d'ouvertures. Une opération de reconstruction doit ensuite être effectuée pour reconstituer l'image de l'objet. La répartition des sténopés au sein d'un masque donné doit répondre à un certain nombre de règles pour faciliter cette reconstruction de l'image et minimiser la contribution du bruit.

Le principe de la méthode a été décrit par : E. Fenimore and T.M. Cannon « Coded aperture imaging with uniformely redundant arrays », AppliedOptics, Vol. 17, N°3, p.337-347, 1-02-1978 ; plusieurs brevets divulguent des dispositifs mettant en oeuvre cette technique à ouverture codée :

- US - 4,389,633 (Fenimore et al) publié en 1983,
- WO - 97/45755 publié en 1997,
- WO - 02/13517 publié en 2002,
- WO - 02/056055 publié en 2002,
- US - 2004/218714 publié en 2004 et
- WO - 2007/091038 publié en 2007.

Les principales limitations des dispositifs à ouverture codée sont leur coût élevé car les masques de grande taille sont de réalisation coûteuse tandis que les imageurs associés doivent avoir des dimensions au moins égales à celles du masque. Leur résolution spatiale n'est pas ajustable car elle est liée, en particulier, à la taille des trous du masque et à la géométrie de détection.

Un dispositif original, décrit dans le document WO - 2007/015784, consiste à utiliser une optique de focalisation de rayons X de forme très particulière permettant de focaliser les rayonnements diffusés par l'objet sur un imageur de petite taille ; toutefois l'optique X focalisatrice ne fonctionne pas pour toutes les énergies de rayonnement et son rendement est assez faible.

L'autre catégorie d'imageurs, dite « à balayage » comporte également plusieurs variantes.

Ainsi la version la plus simple consiste à éclairer l'objet avec un faisceau de rayonnement (typiquement un rayonnement X) ayant un très petit diamètre (on parle parfois de « pinceau ») et à balayer l'ensemble de l'objet grâce à un système mécanique ; la dimension du faisceau de rayonnement et le pas de balayage déterminent la résolution spatiale ; un tel balayage est typiquement effectué au moyen d'une couronne annulaire mobile autour de son centre, percée de passages de collimation, la source de rayonnement étant fixe, située au centre de cette parois annulaire ; cette couronne peut avoir une épaisseur plus ou moins importante selon qu'il s'agit d'une paroi percée de trous ou d'un disque évidé en son centre, dans lequel sont ménagés des canaux radiaux ; cette couronne est parfois appelée roue de hachage (« chopper wheel » en anglais). La rotation de cette couronne provoque un balayage du faisceau perpendiculairement à l'axe de rotation de la couronne ; l'autre mouvement assurant le balayage de l'objet est classiquement assuré par un déplacement de l'objet parallèlement à l'axe de rotation de la couronne. Un détecteur est placé à côté de la source ; il enregistre une suite de signaux qui sont ensuite remis sous une forme matricielle pour constituer l'image rétrodiffusée de l'objet.

Une telle configuration, et des exemples d'application, sont notamment décrits dans les documents US - 5 764 683, WO - 00/33060, WO - 01/94984, WO - 2004/043740 ou WO - 2006/102274.

Selon une variante, le pinceau de balayage résulte de l'interception d'un faisceau en éventail (« fan beam » en anglais) qui est intercepté par une roue dont l'axe est parallèle au plan du faisceau et qui comporte des fentes radiales ; une telle configuration et des exemples d'application sont notamment décrits dans les documents US - Re 28 544, US - 4 031 545, US - 4 799 247, US - 5 179 581, US - 5 181 234, US - 6 094 472 ou US - 6 434 219.

Au lieu d'assurer un balayage par déplacement d'un pinceau de rayonnement suivant deux directions transversales, il est également possible de générer un faisceau en éventail que l'on fait traverser par l'objet à observer, ainsi que cela est par exemple décrit dans le document WO - 98/20366. Il est à noter que la reconstruction d'une image à partir d'un tel balayage peut impliquer un codage analogue à celui indiqué ci-dessus à propos des dispositifs à imageur.

Des variantes mettent en oeuvre les deux types de dispositifs de balayage précités (par un pinceau et par un faisceau en éventail), ainsi que cela est proposé dans les documents WO - 99/39189 et WO - 2008/021807.

Les dispositifs décrits ci-dessus servent en pratique à l'inspection de colis, bagages, voire de camions de transport, ou même de personnes.

L'inconvénient de cette configuration à balayage est de n'utiliser en pratique qu'une très faible partie du rayonnement émis par la source puisque la résolution spatiale est d'autant meilleure que le faisceau d'éclairage est fin ; la source doit en conséquence être de forte intensité et la surface de détection de grande dimension si on veut des temps d'acquisition de durée raisonnable.

Une augmentation de la quantité de rayonnement utilisée peut être obtenue en multipliant le nombre de faisceaux ; cela peut s'obtenir par le codage d'une source ponctuelle avec des masques absorbants comportant des trous ; il est alors nécessaire de reconstruire l'image par des techniques d'inversion de matrices. Une version simple (avec une pluralité de pinceaux formés simultanément au moyen d'une roue de hachage, combinée à un mouvement de l'objet) est décrite dans le document WO - 01/94894. Pour obtenir un bon résultat, en particulier lorsque le balayage est assuré dans deux directions transversales, les trous de collimation formant les faisceaux doivent répondre à des règles de disposition ; le principe le plus connu consiste à projeter des masques et leurs opposés constituant les éléments d'une matrice de Hadamard ; cette méthode d'imagerie nécessite peu de puissance de calcul (il s'agit d'une simple multiplication matricielle), mais sa réalisation pratique est très complexe. Typiquement, pour une image de taille NxN, il faut projeter $2.N^2$ masques. La résolution de l'image finale dépend de la taille du plus petit motif projeté ; plus on cherche à avoir des détails dans cette image, plus le nombre de masques à projeter doit être grand ; mécaniquement ces masques doivent être réalisés et positionnés avec une grande précision ; un tel système est extrêmement complexe et coûteux (voir le document WO - 2008/127385 publié en 2008).

Une autre approche a consisté à effectuer un codage au niveau d'une source étendue, avec un sténopé pour projeter le motif sur l'objet. De la même manière que précédemment, il faut une succession de motifs différents pour acquérir les données puis reconstruire l'image rétrodiffusée (cf US - 6 950 495 publié en 2005).

Ces dispositifs à codage sont très complexes car il faut réaliser une source de grande surface avec des zones (pixel) modulables individuellement en émission ; de plus, l'intensité émise doit être suffisamment élevée pour permettre la projection des motifs via un sténopé, ce qui atténue considérablement le signal ; comme précédemment, la résolution dépend de la taille du plus petit motif projeté.

Ainsi, les solutions connues mettent en oeuvre des dispositifs d'éclairage par balayage qui sont généralement volumineux et complexes du point de vue mécanique, d'autant que le balayage suivant deux directions perpendiculaires implique en pratique un déplacement de l'objet par rapport à la source de rayonnement. En outre, ces dispositifs d'éclairage par balayage ne permettent en pratique d'obtenir une résolution spatiale élevée qu'à la condition de n'appliquer sur l'objet qu'un faisceau de faibles dimensions.

L'invention a pour objet de pallier aux inconvénients des solutions connues et de réaliser, dans un encombrement compact, un éclairage par balayage suivant deux directions, tout en permettant la formation d'images avec une résolution qui ne soit pas dictée par la taille du faisceau de balayage. De manière préférée, elle vise à permettre que le balayage soit effectué en absorbant le rayonnement émis par la source d'une manière variable dans le temps et dans l'espace ; c'est ainsi que, de manière préférée, elle vise à permettre que l'éclairage puisse se faire selon de premières modalités, par exemple en vue d'une prise d'image grossière, puis selon d'autres modalités permettant une prise d'image de meilleure qualité, éventuellement limitée à une partie seulement de la première image.

L'invention propose ainsi de mettre en oeuvre deux cylindres ou portions de couronne mobiles en rotation autour de deux axes se croisant en un centre à partir duquel est généré un rayonnement en faisant un angle non nul entre eux (de préférence égal à 90°), ces éléments mobiles en rotation étant formés de parties vides et de portions opaques aux rayonnement telles que le croisement de parties de ces éléments de même nature définissent, soit une zone non éclairée au sein d'une grande zone éclairée, soit une zone éclairée au sein d'une grande zone non éclairée, ces éléments étant commandés en rotation par des moteurs pas à pas dont les pas élémentaires ont des amplitudes angulaires qui sont des sous-multiples de l'amplitude des parties qui se croisent.

Dans le contexte de l'invention, un pas d'un moteur est dit « pas élémentaire » lorsque ce pas est le plus petit avec lequel ce moteur, pris avec son éventuel réducteur, est prévu pour fonctionner en fonction de son mode d'alimentation ; ainsi, lorsque cette alimentation est effectuée pôle par pôle, le pas élémentaire est égal à un pas du moteur, tandis que, si l'alimentation se fait deux pôles par deux pôles, le pas élémentaire est un demi-pas du moteur ; lorsque, dans un cycle de mesure, on prévoit de toujours appliquer à un tel moteur plusieurs impulsions, le pas élémentaire peut alors être compris comme étant le pas auquel correspond un tel nombre d'impulsions. On appelle « pas angulaire élémentaire » ou « pas élémentaire de balayage » le pas angulaire dont tourne un élément commandé par un tel moteur lorsque celui-ci tourne d'un tel pas élémentaire.

De manière préférée, l'une des portions de couronne fait partie d'une couronne complète dont la commande est assurée par un moteur pas à pas conçu pour pouvoir commander la rotation de cette couronne dans un même sens de rotation ; en variante, chacune des portions peut tourner dans un sens, puis dans l'autre pour revenir à une configuration de départ de balayage.

Il y a donc deux cas, selon que les éléments qui se croisent sont des parties vides ou des parties opaques au rayonnement, avec un « faisceau d'éclairage » qui est, soit un faisceau d'éclairage localement accru, soit un faisceau d'éclairage localement neutralisé.

Ainsi, selon une première définition de l'invention, celle-ci propose un dispositif d'éclairage par balayage comportant une source d'éclairage définissant un centre d'émission, un élément de collimation délimitant un secteur d'éclairage à partir du centre dans lequel le rayonnement émis est sensiblement homogène, au moins une portion de couronne cylindrique centrée sur la source et mobile en rotation autour d'un premier axe passant par le centre d'émission, cette portion de couronne cylindrique comportant une fente ayant une amplitude angulaire $\alpha$ entourée de deux portions opaques au rayonnement ayant chacune une amplitude angulaire au minimum égale à celle du secteur d'éclairage délimité par l'élément de collimation, une portion de cylindre centrée sur la source et mobile en rotation, à l'intérieur d'un débattement donné, autour d'un second axe passant par le centre d'émission en formant un angle non nul par rapport au premier axe, cette portion de cylindre comportant une fente parallèle au second axe de rotation ayant une amplitude angulaire $\beta$ entourée de deux portions opaques au rayonnement ayant chacune une amplitude angulaire au minimum égale à celle du secteur d'éclairage délimité par l'élément de collimation, un premier dispositif de commande pas à pas de la rotation de la portion de couronne cylindrique définissant un pas angulaire élémentaire $\alpha\alpha$ qui est un sous-multiple de l'amplitude angulaire $\alpha$ de ladite fente de cette portion de couronne cylindrique tel qu'il existe un entier N1 différent de 1 respectant la condition $\alpha=N1.\alpha\alpha$, et un dispositif de commande pas à pas de la rotation de la portion de couronne définissant un pas angulaire élémentaire $\beta\beta$ qui est un sous-multiple de l'amplitude $\beta$ de la fente de cette portion de cylindre tel qu'il existe un entier N2 différent de 1 respectant la condition $\beta=N2.\beta\beta$.

De manière particulièrement avantageuse, la portion de couronne cylindrique est une couronne cylindrique comportant une pluralité de fentes ayant ladite amplitude angulaire $\alpha$ et régulièrement réparties autour de son axe de rotation et le premier dispositif de commande pas à pas est conçu pour pouvoir commander cette couronne dans un même sens de rotation.

Selon l'autre définition annoncée ci-dessus (qui inverse le rôle des parties pleines et les fentes du dispositif précité, le « faisceau d'éclairage » étant un faisceau dans lequel l'amplitude lumineuse est localement diminuée), l'invention propose aussi un dispositif d'éclairage par balayage comportant une source d'éclairage définissant un centre d'émission, un élément de collimation délimitant un secteur d'éclairage à partir du centre dans lequel le rayonnement émis est sensiblement homogène, au moins une portion de couronne cylindrique centrée sur la source et mobile en rotation autour d'un premier axe passant par le centre d'émission, cette portion de couronne cylindrique comportant une portion opaque au rayonnement en ayant une amplitude angulaire $\alpha$ entourée de deux portions transparentes au rayonnement ayant chacune une amplitude angulaire au minimum égale à celle du secteur d'éclairage délimité par l'élément de collimation, une portion de cylindre centrée sur la source et mobile en rotation, à l'intérieur d'un débattement donné, autour d'un second axe passant par le centre d'émission en formant un angle non nul par rapport au premier axe, cette portion de cylindre comportant une portion opaque au rayonnement qui est parallèle au second axe de rotation en ayant une amplitude angulaire $\beta$ entourée de deux portions transparentes au rayonnement ayant chacune une amplitude angulaire au minimum égale à celle du secteur d'éclairage délimité par l'élément de collimation, un premier dispositif de commande pas à pas de la rotation de la portion de couronne cylindrique définissant un pas angulaire élémentaire $\alpha\alpha$ qui est un sous-multiple de l'amplitude angulaire $\alpha$ tel qu'il existe un entier N1 différent de 1 respectant la condition $\alpha = N1.\alpha\alpha$, et un dispositif de commande pas à pas de la rotation de la portion de couronne définissant un pas angulaire élémentaire $\beta\beta$ qui est un sous-multiple de l'amplitude $\beta$ tel qu'il existe un entier N2 différent de 1 respectant la condition $\beta = N2.\beta\beta$.

De manière particulièrement avantageuse, la portion de couronne cylindrique est une couronne cylindrique comportant une pluralité de fentes régulièrement réparties autour de son axe de rotation en étant séparées par des portions opaques ayant ladite amplitude angulaire $\alpha$ et le premier dispositif de commande pas à pas est conçu pour pouvoir commander cette couronne cylindrique dans un même sens de rotation.

On appréciera qu'un tel dispositif d'éclairage par balayage, appelé modulateur dans ce qui suit, est compact en ce sens que les déplacements du faisceau sont effectués suivant deux directions transversales de balayage dans un encombrement à peine supérieur à celui d'un dispositif connu à roue de hachage. En outre, le fait que les mouvements sont commandés par des moteurs pas à pas permet que les prises d'image d'un objet ainsi éclairé puissent se faire selon une fréquence bien précise, à laquelle correspond un pas angulaire de mesure bien précis (il s'agit du pas angulaire de rotation de l'un ou l'autre des éléments rotatifs entre deux prises d'image). Les prises d'image peuvent être effectuées en dehors des mouvements de ces moteurs si ces mouvements sont suffisamment lents ; en variante, si les moteurs ne s'arrêtent pas complètement entre deux pas de mesure successifs, les images ainsi captées entre ces deux pas de mesure peuvent être soumises à un traitement de correction de flou, ainsi que cela est connu, notamment, dans le domaine de la tomographie.

Le fait que les pas élémentaires de ces moteurs pas à pas sont tels que les faisceaux émis pour deux positions voisines d'un pas élémentaire ont des parties communes permet avantageusement de varier l'éclairage selon plusieurs modalités selon que les moteurs sont actionnés pas élémentaire par pas élémentaire (un pas de mesure correspond alors à un pas élémentaire), ou multiples de pas élémentaires par multiples de pas élémentaires (un pas de mesure vaut alors plusieurs pas élémentaires), tout en permettant que, quelles que soient les modalités choisies, le balayage soit appliqué à l'ensemble de l'objet. On comprend que les pas élémentaires de balayage contribuent à déterminer la résolution spatiale maximale que peut atteindre un dispositif d'imagerie comportant un tel modulateur, sans que cette résolution soit imposée par les dimensions du faisceau d'éclairage, ce qui permet d'augmenter l'utilisation du flux généré par la source du rayonnement, ou à l'inverse de réduire la puissance de cette source de rayonnement.

Un tel modulateur peut être considéré comme étant dynamique en ce sens que la résolution spatiale peut être choisie et modifiée en fonction des besoins pour une même configuration structurelle.

Selon des caractéristiques préférées de l'invention :

- les amplitudes angulaires $\alpha$ et $\beta$ sont égales et les entiers N1 et N2 sont égaux ; cela simplifie la géométrie du faisceau d'éclairage ainsi que le traitement ultérieur, au sein d'un dispositif d'imagerie.
- les entiers N1 et N2 sont tous deux impairs, ce qui a l'avantage de permettre que le faisceau d'éclairage puisse être centré sur un faisceau élémentaire dont l'amplitude angulaire serait celle d'un seul pas élémentaire ; il en découle des formules mathématiques qui sont symétriques, mais des nombres pairs sont tout aussi utilisables.
- les fentes sont en un nombre compris entre 5 et 10 (cela vaut aussi bien pour le cas où le faisceau d'éclairage est délimité par les fentes que pour le cas où les parties opaques occultent localement le faisceau d'éclairage) ; cela correspond à un nombre raisonnable d'un point de vue pratique.
- Le dispositif contenu dans un boîtier de dimensions inférieures à $50 \times 50 \times 50 \ cm^3$ ; cela traduit une bonne compacité, qui permet que ce dispositif soit portable par un opérateur sans grande difficulté.

L'invention vise en outre à proposer un dispositif d'imagerie par balayage, en rayonnement X par exemple, en rétrodiffusion ou en transmission, dont la résolution spatiale de l'image rétrodiffusée ou transmise n'est pas déterminée par les dimensions du faisceau de balayage et peut, de manière préférée, être ajustée en fonction des besoins de l'analyse sans avoir à modifier la structure de ce dispositif. Elle vise également à permettre d'utiliser une partie significative du rayonnement émis par la source de rayonnement, en permettant en conséquence la mise en oeuvre de sources moins puissantes que dans les solutions connues.

Plus précisément l'invention propose en outre un dispositif d'imagerie par balayage comportant un dispositif d'éclairage du type précité, comportant en outre une zone de réception dont le volume est destiné à recevoir un objet à imager, et au moins un détecteur monobloc positionné par rapport à cette zone de réception en sorte que son champ de vue puisse détecter un rayonnement rétrodiffusé ou transmis par un tel objet soumis dans cette zone à un balayage par un faisceau de balayage émis par le dispositif d'éclairage, en étant synchronisé avec les dispositifs de commande pas à pas du dispositif d'éclairage de manière à effectuer des opérations de détection entre des pas de mesure successifs de ces dispositifs de commande et fournir une mesure de rayonnement reçu dans son champ de vue pour chaque position de mesure du faisceau de balayage commandée par ces dispositifs de commande pas à pas, ces pas de mesure valant un ou plusieurs pas élémentaires.

Il est à noter que, selon les besoins, les dispositifs de commande peuvent commander un balayage selon les pas élémentaires précités, ou selon des pas de mesure plus grands.

De manière préférée :

- le détecteur monobloc est conçu pour pouvoir fournir des mesures de rayonnement pour des positions des portions de cylindre dans lesquelles des zones de celles-ci qui ont ladite amplitude $\alpha$ ou $\beta$ n'interceptent qu'au plus une partie du secteur d'éclairage du dispositif d'éclairage
- Le dispositif comporte au moins un détecteur de rayonnement diffusé et au moins un détecteur de rayonnement transmis.

Comme on le sait, on peut distinguer deux grandeurs différentes à propos des dimensions d'un tel détecteur monobloc : l'épaisseur qui est en pratique adaptée au rayonnement à détecter (plus il est épais, plus le rayonnement interagit avec la matière sensible du détecteur, et meilleure est l'efficacité de détection) et la surface présentée au flux de rayonnement à mesurer. Cette surface est uniquement fonction de la quantité de rayonnement à intercepter, quantité qui est liée à la réponse temporelle du scintillateur dans le cas du comptage de photons (il faut éviter les empilements) et de la capacité de comptage de la carte (deux impulsions séparées par un temps très court doivent pouvoir être comptés séparément). Dans le cas d'un fonctionnement en intégrateur, la taille du détecteur sera fonction de la dynamique de l'intégrateur qui suit le détecteur.

L'invention propose également un procédé de formation d'une image d'un objet situé en une zone de réception, selon lequel :

a. on soumet l'objet à un balayage par un faisceau d'éclairage émis par un dispositif d'éclairage tel que défini ci-dessus, pas de mesure par pas de mesure suivant chaque direction de balayage, chaque pas de mesure d'un des dispositifs de commande de ce dispositif d'éclairage valant un ou plusieurs pas élémentaires de ce dispositif de commande,

b. on acquiert, après chaque pas de mesure d'un des dispositifs de commande de ce dispositif d'éclairage, une mesure de la quantité de rayonnement diffusé (et / ou transmis) par l'objet soumis au faisceau d'éclairage à cet instant et on stocke cette mesure dans une matrice dont les lignes et les colonnes correspondent aux positions respectives des dispositifs de commande du dispositif d'éclairage,

c. puis on reconstruit l'image de l'objet par déconvolution de ladite matrice contenant lesdites mesures par une matrice représentative du faisceau d'éclairage à cet instant.

De manière avantageuse, on soumet d'abord l'objet à un balayage par un faisceau d'éclairage émis par le dispositif d'éclairage suivant un pas de mesure égal à un nombre de pas élémentaires supérieur à 1, on sélectionne au sein de la zone de réception une partie de l'objet à analyser et on applique les étapes a à c à cette partie seulement avec un pas de mesure égal audit pas élémentaire.

On comprend que, pour appliquer les étapes précitées à une partie seulement de l'objet, on peut n'effectuer des mesures de rayonnement que pour certaines des positions de la portion de cylindre (ce qui revient à ne pas faire de mesures sur toute l'amplitude possible, transversalement au second axe de rotation ; en ce qui concerne le balayage commandé par le premier dispositif de commande pas à pas, on peut choisir de ne procéder à des mesures que pour certaines des positions possibles d'une fente, ou choisir de commander en va-et-vient un tel dispositif pas à pas. Un balayage sélectif d'une partie seulement d'un objet est particulièrement facile lorsque chaque dispositif de commande pas à pas commande, en va-et-vient, une simple portion de cylindre, notamment dans le cas où la couronne cylindrique 3 ou 103 est réduite à une portion de cylindre.

Des objets, caractéristiques et avantages de l'invention ressortent de la description qui suit, donnée à titre d'exemple illustratif non limitatif en regard des dessins annexés sur lesquels :

- la figure 1 est un schéma de principe d'un dispositif d'éclairage par balayage selon un premier exemple de réalisation conforme à l'invention,
- la figure 2 est un schéma de principe d'un dispositif d'imagerie mettant en oeuvre le modulateur de la figure 1,

- la figure 3 est un schéma montrant la constitution d'une matrice d'acquisition de mesures effectuées sur un objet soumis à un balayage par le modulateur de la figure 1,
- la figure 4 est un schéma montrant la constitution d'un autre dispositif d'imagerie intégrant le modulateur de la figure 1,
- la figure 5 est un schéma d'une variante de réalisation du modulateur de la figure 1, suivant un principe inverse,
- la figure 6 est une vue éclatée d'un modulateur analogue à celui de la figure 1, en vue de côté,
- la figure 7 en est une vue de face,
- la figure 8 est un chronogramme représentant le fonctionnement d'un dispositif d'imagerie conforme à la figure 4,
- la figure 9 est un schéma de principe d'une chaîne d'acquisition de mesures.

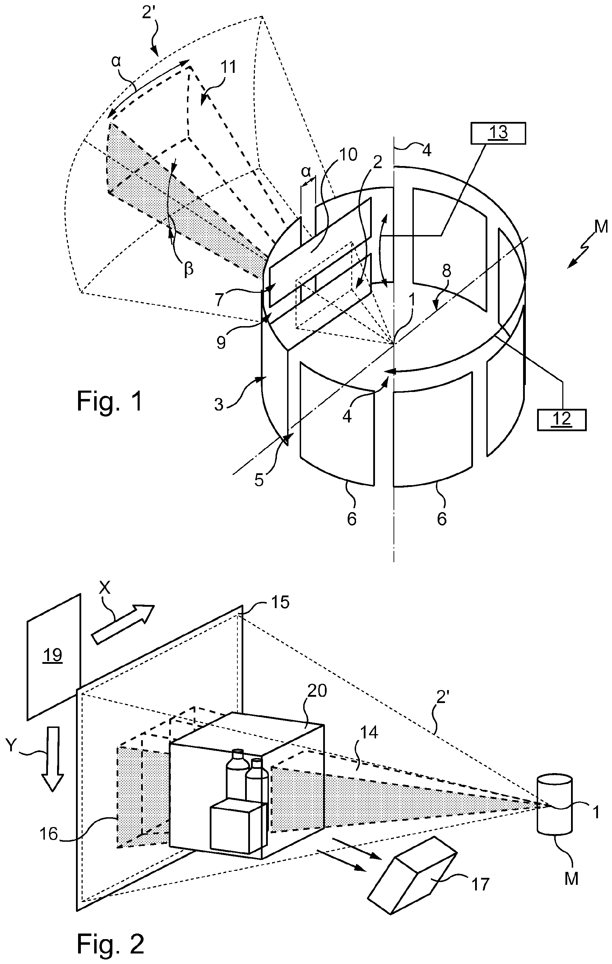

La figure 1 représente un dispositif d'éclairage par balayage, appelé modulateur de rayonnement, selon un premier mode de réalisation de l'invention.

Ce modulateur, noté M dans son ensemble, comporte une source de rayonnement 1 supposée ponctuelle et donc située en un point, lequel est désigné par la référence 1. Cette source de rayonnement peut être une source continue émettant un flux constant de photons ou bien une source pulsée émettant une succession d'impulsions identiques à une fréquence déterminée ; dans ce second cas, le délai entre deux impulsions successives est suffisamment faible par rapport aux changements de configuration du modulateur (voir ci-dessous) pour que le flux moyen de rayonnement puisse être considéré comme quasiment constant.

C'est autour de ce point 1, appelé centre d'émission, voire simplement centre, par la suite, que sont disposés les autres éléments constitutifs du modulateur.

De manière générale, ce modulateur a pour fonction de déplacer devant la source des alternances de matériaux absorbants et non absorbants au rayonnement issu de la source afin d'éclairer successivement des zones déterminées de l'espace en sorte de former un faisceau assurant un balayage suivant deux directions transversales l'une à l'autre et transversales à la direction du faisceau de balayage.

Ce modulateur comporte un collimateur primaire statique propre à donner au faisceau émis par la source 1 une forme et une amplitude données ; le faisceau ainsi collimaté est désigné par la référence 2 qui désigne donc indirectement ce collimateur primaire ; le prolongement de ce faisceau à l'extérieur du modulateur est désigné par la référence 2'. On comprend que ce collimateur délimite la zone de l'espace (c'est un secteur angulaire à partir de la source 1) dans laquelle le rayonnement de la source primaire peut, grâce aux autres éléments du modulateur, être projeté en dehors du modulateur, et dans laquelle doit être situé un objet à imager. Dans l'exemple représenté, ce secteur angulaire est pyramidal mais peut, en variante, être conique, voire avoir une forme plus complexe, par exemple hexagonale, voire en forme à plusieurs lobes.

Ce secteur angulaire défini le champ angulaire dans lequel le modulateur peut assurer un éclairage par balayage.

Autour de la source et du collimateur est disposée une couronne cylindrique désignée sous la référence 3. Cette couronne est centrée sur un axe 4 autour duquel elle est mobile en rotation ; cet axe, ici vertical, passe par la source 1, c'est-à-dire le centre du modulateur. Cette couronne comporte une pluralité de fentes 5, en pratique parallèles à son axe ; ces fentes, ici au nombre de 8, sont toutes identiques et leur espacement angulaire est régulier (c'est-à-dire que les espaces angulaires, ou intervalles, entre deux fentes successives sont identiques, quelles que soient les fentes considérées). Ces fentes ont pour fonction de laisser passer une fraction du rayonnement 2 transmis par le collimateur lorsqu'elles sont positionnées devant celui-ci ; par contre, les zones pleines 6 situées entre ces fentes sont dimensionnées en sorte que le rayonnement transmis par le collimateur puisse être entièrement obturé, et donc arrêté, par chacune de ces zones pleines. Ces zones pleines, opaques au rayonnement, ont une amplitude angulaire au minimum égale à l'amplitude angulaire, autour de l'axe 4, du secteur d'éclairage délimité par l'élément de collimation. Ces fentes ont des amplitudes angulaires, mesurées par rapport au centre 1, qui sont les mêmes, notées a.

Le modulateur comporte en outre une portion 7 d'un second cylindre, d'axe 8 passant par la source 1, faisant un angle non nul, de préférence égal à 90°, avec l'axe de la couronne cylindrique 3. Cette portion 7 est elle aussi mobile en rotation autour de son axe 8. Elle comporte une unique fente 9, en pratique parallèle à cet axe 8 ; son amplitude angulaire à partir du centre 1 est noté $\beta$. Cette fente a aussi pour fonction, conjointement avec les fentes 5, de laisser passer une fraction du rayonnement 2 transmis par le collimateur lorsqu'elle est positionnée devant celui-ci ; on comprend en effet que chacune des fentes 5 peut délimiter avec la fente 9 une ouverture délimitant, suivant chacun des axes, une fraction du faisceau collimaté autorisée, à un instant donné, à éclairer une fraction de l'espace extérieur. De même que pour les portions pleines 6 de la couronne cylindrique 3, les portions pleines 10 situées de part et d'autre de la fente 9, opaques au rayonnement, ont une amplitude angulaire suffisante pour permettre d'obturer la totalité du faisceau collimaté 2, et ont donc une amplitude angulaire au moins égale à l'amplitude angulaire, autour de l'axe 8, du secteur d'éclairage délimité par l'élément de collimation.

Dans la configuration représentée à la figure 1, l'une des fentes 5 délimite avec la fente 9 un faisceau d'éclairage désigné par la référence 11. Pour des raisons de lisibilité, les dimensions de celui-ci ont été exagérées sur la figure 1 par rapport aux dimensions angulaires de l'ouverture formée conjointement par la fente 9 et l'une des fentes 5 ; en effet, son amplitude en largeur (perpendiculairement aux fentes 5) vaut $\alpha$ tandis que son amplitude en hauteur (perpendiculairement à la fente 9) vaut $\beta$.

A titre d'exemple, le faisceau représente le 1/16 de la zone couverte par le collimateur (9°/36°)$^2$.

De manière avantageuse ces amplitudes angulaires $\alpha$ et $\beta$ sont égales l'une à l'autre.

La portion de cylindre 7 est ici située à l'intérieur du volume de la couronne cylindrique, mais peut en variante être située à l'extérieur de celle-ci.

Le modulateur comporte en outre des moteurs pas à pas permettant de déplacer la couronne 3 et la portion 7 dans leurs mouvements respectifs. Le fait que ces moteurs soient de type pas à pas implique qu'ils sont adaptés à déplacer de manière incrémentale la couronne, d'une part, et la portion de cylindre, d'autre part. La notion de moteurs pas à pas inclut ici les réducteurs dont ils sont habituellement dotés.

La flèche située au-dessus de la couronne cylindrique 3 à la figure 1 désigne un sens constant de mouvement (ici dans le sens des aiguilles d'une montre), tandis que la flèche associée à la portion 7 est double, ce qui signifie que cette portion peut se déplacer dans un sens ou dans l'autre autour de son axe 8, à l'intérieur d'un débattement angulaire donné. Le moteur pas à pas associé au mouvement de la couronne est schématisé sous la référence 12, tandis que celui associé au mouvement de la portion de cylindre est schématisé sous la référence 13.

La constance du sens du balayage par la couronne cylindrique 3 est rendue possible par la répartition régulière des fentes 5 et des zones pleines 6 ; on comprendra plus loin que, en variante, il suffit que la couronne cylindrique comporte une seule fente 5 (ou soit réduite à une portion de couronne cylindrique) si le moteur pas à pas associé 12 peut agir dans les deux sens (un sens pour le balayage et le sens inverse pour revenir en configuration de départ) ; toutefois, ainsi que cela ressortira de la suite, il est bien plus simple que la couronne cylindrique puisse n'être déplacée que dans un unique sens, et cela permet un balayage plus rapide. Bien entendu, on peut combiner les deux types de commande (sens unique, et va-et-vient, selon les besoins).

Les moteurs pas à pas 12 et 13 sont commandés en sorte de pouvoir agir de manière synchronisée sur la couronne cylindrique 3 et la portion de cylindre 7. En particulier, le moteur pas à pas 13 commandant la portion de cylindre 7 fait avancer cette portion de cylindre d'un pas de mesure (écart angulaire entre deux configurations dans lesquelles il y a une prise d'image - comme cela sera détaillé plus loin, ce pas de mesure peut valoir un pas élémentaire ou plusieurs de ces pas élémentaires) lorsque le moteur pas à pas 12 commandant la couronne cylindrique 3 tourne d'un angle correspondant à l'amplitude angulaire combinée d'une portion pleine 6 et d'une fente 5 (la couronne est formée d'une pluralité de motifs, chaque motif comportant une fente et une partie pleine). En d'autres termes, la rotation du moteur 12 nécessaire pour amener une fente dans la même position angulaire que la fente précédente correspond à un nombre entier de ses pas élémentaires.

De même, l'amplitude angulaire des fentes 5 correspond à un nombre entier de pas élémentaires du moteur 12.

Par analogie, l'amplitude angulaire de la fente unique 9 correspond avantageusement à un nombre entier de pas élémentaires du moteur 13.

En effet, pour une position donnée de la portion de cylindre, un balayage parallèle à l'axe de celle-ci est assuré en déplaçant une fente, pas de mesure par pas de mesure, de l'un à l'autre des côtés du faisceau collimaté ; ensuite, le balayage se poursuit de la même façon, grâce à une fente adjacente, pour une autre position du moteur après le mouvement d'un nouveau pas de mesure.

Il est important de noter que, selon l'invention, les moteurs pas à pas ont des pas élémentaires qui correspondent à des amplitudes angulaires qui sont des sous-multiples des amplitudes angulaires des fentes 5 ou 9.

Ainsi, si $\alpha\alpha$ est l'amplitude angulaire élémentaire d'un pas élémentaire du moteur 12, il existe un entier N1 différent de 1 tel $\alpha$=N1.$\alpha\alpha$.

De même, si $\beta\beta$ est l'amplitude angulaire élémentaire d'un pas élémentaire du moteur 13, il existe un entier N2 différent de 1 tel que $\beta$=N2.$\beta\beta$.

Les pas élémentaires de rotation angulaire de la couronne 3 et de la portion de cylindre 7 sont avantageusement égaux ($\alpha\alpha$=$\beta\beta$), ce qui permet d'assurer un balayage de même finesse dans les deux directions de balayage. A titre subsidiaire, cela facilite la mise en oeuvre de moteurs identiques pour les deux sens de balayage.

De même il est avantageux de donner aux fentes des amplitudes angulaires égales, $\alpha$=$\beta$ (d'où une forme carrée de la section des ouvertures ainsi délimitées conjointement). Lorsque $\alpha\alpha$=$\beta\beta$, cela revient à dire que N1=N2.

Il peut être noté que le faisceau d'éclairage sortant du modulateur, c'est-à-dire passant au travers des fentes de la couronne et de la portion de cylindre, conserve une forme et des dimensions identiques lorsqu'il se déplace angulairement : ce faisceau de rayonnement sortant est nommé pinceau dans la suite du texte.

La figure 2 représente un exemple d'utilisation du modulateur de la figure 1 pour réaliser un dispositif d'imagerie rétrodiffusée et/ou transmise. Le modulateur M y est schématisé sous la forme d'un petit cylindre, bien plus petit que dans la figure 1, pour des raisons de lisibilité.

Un objet 20 à imager (ou la partie que l'on veut imager au sein d'un objet) est placé à l'intérieur du champ 2' dans lequel le modulateur est capable d'assurer un éclairage par balayage. On comprend que cet objet à imager, c'est-à-dire à analyser au moyen du rayonnement choisi, est souvent un contenant dont on veut identifier le contenu, unique ou multiple ; il est ici schématisé par un cube dans lequel sont dissimulés plusieurs éléments. Ce cube occupe ici la quasi-totalité du volume d'une zone de réception au sein de laquelle doit se situer un objet pour pouvoir être analysé ; la forme de cette zone de réception est définie par la forme du collimateur primaire. Dans la suite, la référence 20 désignera indifféremment cette zone de réception et l'objet à imager qui y est situé.

Ainsi que cela a été expliqué à propos de la figure 1, le modulateur permet de balayer l'objet à analyser 20 avec un pinceau de rayonnement 11 délimité par le croisement d'une des fentes 5 de la couronne et de la fente 9 du second cylindre. Il est rappelé que le pinceau de rayonnement est représenté de manière exagérément grande; il est désigné par la référence 14 lorsqu'il est en position centrale. La projection de ce pinceau de rayonnement dans un plan 15 situé derrière l'objet est figurée en 16. Selon un aspect de l'invention, en projection dans un plan transversal passant par l'objet, le pinceau de rayonnement de dimension supérieure à la résolution spatiale recherchée dans l'image rétrodiffusée (ou transmise) car la résolution spatiale ne dépend pas de la taille du pinceau de rayonnement mais elle dépend du pas de déplacement de celui-ci entre deux mesures, c'est-à-dire entre deux prises d'image (d'où la notion de pas de mesure). Il est donc possible, selon l'invention, d'utiliser un pinceau de rayonnement assez large pour faire passer suffisamment de rayonnement et améliorer le rapport signal à bruit au niveau du détecteur. La référence 17 désigne un détecteur monobloc qui détecte le rayonnement rétrodiffusé par l'objet pour chaque position d'éclairement du pinceau de rayonnement issu de la source et sélectionné par le modulateur. L'image transmise (le même raisonnement s'applique à l'image rétrodiffusée) est reconstruite à partir de l'ensemble des enregistrements successifs comme décrit ci-après.

Le détecteur monobloc 17 servant à détecter l'image rétrodiffusée par l'objet 20 est avantageusement complété par un détecteur monobloc de grande dimension afin de détecter le rayonnement transmis au travers de l'objet pour chaque position du pinceau de rayonnement et d'utiliser ces informations pour reconstruire, suivant le même principe que pour une image rétrodiffusée, une image du rayonnement transmis par l'objet en complément de l'image rétrodiffusée. En variante, on peut choisir de ne former qu'une image de rayonnement transmis. Ce détecteur monobloc de détection d'image transmise peut être constitué par le plan 15 représenté à la figure 2.

La position de départ d'un cycle de balayage correspond à des positions de la couronne et de la portion de cylindre telles que la trace sur le plan 15 du secteur angulaire délimité par une fente 5 et la fente 9 (on parle de « motif » dans la suite) se trouve à l'extérieur de la zone d'analyse ; cette position de départ est désignée par la référence 19. C'est-à-dire que, a minima, la limite extérieure du motif 19 tangente la limite extérieure de la trace sur le plan 15 de la zone d'analyse 2'. Le balayage est fini lorsque le motif a parcouru pas à pas toute la zone d'analyse et est arrivé à la limite extérieure opposée de cette zone. Il est à noter que, dans le cas représenté où la position de départ 19 est tangente à la zone d'analyse, il n'y pas de pinceau de rayonnement puisque l'ouverture délimitée par l'une des fentes 5 et la fente 9 est en dehors du faisceau collimaté 2'. Il en sera de même lors du premier balayage suivant un sens X ou Y (voir les flèches de la figure 2), pour les positions extrêmes des balayages suivants et lors du dernier balayage. C'est pourquoi il peut être préférable que la position de départ corresponde à une position où la trace 19 se superpose à la trace de la zone d'analyse sur une amplitude correspondant à un pas de moteur suivant chacune des directions.

A la limite on peut démarrer avec un pas de moteur dans la zone 2' sachant que la ligne précédente sera à zéro. Dans la réalité cette première ligne ne sera pas nulle mais contiendra surtout le bruit de fond. Si on se décale de plusieurs pas, la taille de l'image reconstruite sera d'autant de pas plus petite. Donc en commençant au bord, on profite de la totalité de la zone délimitée par le collimateur primaire.

La mesure du rayonnement diffusé (le raisonnement est le même pour le rayonnement transmis) reçu par le détecteur monobloc 17 est synchronisée avec les moteurs pas à pas. Après chaque mouvement d'un des deux cylindres (c'est-à-dire après chaque pas de mesure) une mesure de rayonnement diffusé arrivant sur le détecteur est démarrée et cette mesure est arrêtée au prochain mouvement d'un des deux cylindres. Le détecteur mesure la quantité de rayonnement qu'il reçoit, sur la totalité de son champ de vue, soit par comptage des photons (flux de rayonnement faibles), soit par intégration du rayonnement (flux de rayonnement élevés). Le choix du mode de détection dépend de l'activité de la source, des caractéristiques du modulateur et de la géométrie du dispositif. Les mesures sont stockées ligne par ligne en correspondance avec le balayage X-Y de la zone éclairée par le pinceau de rayonnement. Les mesures se terminent lorsque toute la zone délimitée par le collimateur primaire a été balayée. L'ensemble des mesures constitue une matrice correspondant au produit de convolution de l'image rétrodiffusée de l'objet avec l'intensité et la forme de la projection du pinceau de rayonnement dans le plan de l'objet. Une opération de déconvolution de cette matrice permet de reconstruire l'image rétrodiffusée. La matrice correspondant à la forme et à l'intensité du pinceau projeté peut être calculée à partir de la connaissance de la largeur des fentes du modulateur et de la géométrie d'acquisition. Elle peut aussi être identifiée expérimentalement en laboratoire à l'aide d'un imageur.

Le pas de balayage, entre deux mesures, définit la taille du pixel de l'image. La résolution spatiale de cette image est donc fixée par la taille du pas de déplacement du pinceau de rayonnement lors des mouvements des moteurs. Ce dispositif d'imagerie permet donc de choisir, et donc modifier, la résolution spatiale avec laquelle l'objet est analysé sans aucune modification ni du dispositif lui-même, ni de son installation auprès de l'objet. Il est ainsi possible de faire rapidement une première image peu résolue (avec un pas de balayage grossier, avec un pas de mesure valant plusieurs pas élémentaires) pour déterminer une zone d'intérêt que l'on inspectera ensuite avec une résolution plus fine (pas de balayage réduit, c'est-à-dire avec un pas de mesure valant un moindre nombre de pas élémentaires, éventuellement égal à 1) par exemple.

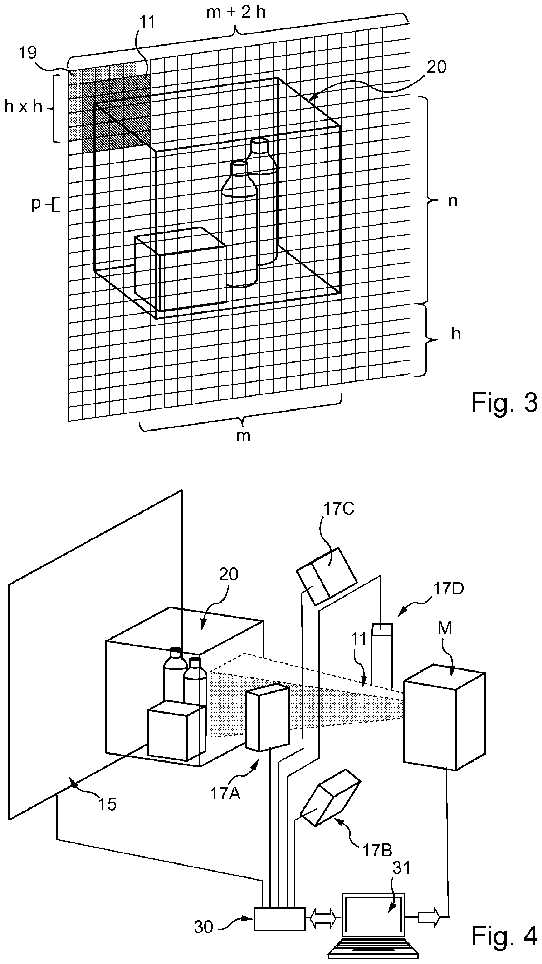

Le principe de la construction d'une matrice d'acquisition de mesure est schématisé à la figure 3. Ce schéma sert à illustrer le fait que la zone de balayage peut être découpée de façon virtuelle en pixels qui correspondent à un pas de déplacement, ici un pas élémentaire. Toutefois, puisque chaque détecteur est d'un type monobloc, il fournit à chaque instant une seule mesure.

On utilise en effet la totalité de l'information issue du détecteur ; sa mesure constitue un élément de la matrice des mesures, pour une position du faisceau.

Puisque, comme expliqué ci-dessus, les amplitudes angulaires du pinceau de rayonnement sont des multiples de ces pas élémentaires, la trace d'un tel pinceau sur une zone de l'objet est délimitée par un rectangle, voire un carré dans le cas ici considéré où les amplitudes angulaires sont les mêmes dans les deux sens ; le nombre de pas élémentaires contenu dans un côté de cette trace est noté h. En d'autres termes, h est le nombre de positions du faisceau, dans chaque direction de balayage, pour lequel une même zone élémentaire de l'objet interagit avec le faisceau de balayage

Dans le cas défini ci-dessus où le balayage se fait avec des positions extrêmes où l'ouverture définie par les fentes est tangent, sans recouvrement, à la trace de la zone d'analyse, la zone totale de scrutation représentée sur cette figure 3 a une largeur de m+2h et une hauteur de n+2h si m et n sont les nombres de pas élémentaires en largeur et en hauteur pour explorer la zone d'analyse et donc la taille de l'image reconstruite.

Après un premier balayage suivant la direction X (sans éclairage), le second balayage, après un pas élémentaire p vers le bas, fait circuler le faisceau 11 de telle manière qu'il intercepte le faisceau collimaté, de sorte qu'il assure un éclairage de l'objet, bien que ce soit avec des dimensions différentes de celles qu'aura ce faisceau lorsque les ouvertures délimitées par les fentes 5 et 9 seront complètement contenues dans le faisceau collimaté.

Le nombre total de pas de mesure (ou pas de scrutation) est dans ce cas (m+h).(n+h).

Notons X (i,j) la matrice représentant l'image rétrodiffusée que l'on cherche à reconstruire. A chaque pas élémentaire, si on note par k et i les nombres de pas élémentaires effectués par les dispositifs de commande, la grandeur $M_{kl}$ mesurée par le détecteur est proportionnelle à la somme (sur les lignes et colonnes) du produit (multiplication terme à terme) de la matrice X par la matrice H représentant la forme et l'intensité du pinceau de rayonnement projeté dans le plan de l'objet.

*Objet X    multiplication terme à terme    pinceau H*

Ecrit autrement, pour un pinceau H de dimension h x h avec h = 2N+1

$$M_{kl} = \sum_{j=-N}^{N} \sum_{i=-N}^{N} X(k-i, l-j).H(i, j)$$

Ce qui correspond, dans le cadre des distributions, au produit de convolution de X par H

$$M_{kl} = (X * H)(k,l)$$

où * est le produit de convolution

Définition mathématique de la convolution au sens des fonctions :

$$( f * g )(x, y) = \int_{-\infty}^{\infty} \int_{-\infty}^{\infty} f(x-t, y-u).g(t,u).dt.du = \int_{-\infty}^{\infty} \int_{-\infty}^{\infty} f(t,u).g(x-t, y-u).dt.du = ( g * f )(x, y)$$

Ce qui donne pour la totalité du balayage, le produit de convolution entre l'objet X et le pinceau H.

Objet *X*        pinceau *H*        mesures *M*

$$
\begin{pmatrix}
x_{11} & x_{12} & x_{13} & x_{14} & . & . & . & . & x_{1j} & . & . & . & . & x_{1n} \\
x_{21} & & & & & & & & & & & & & . \\
x_{31} & & & & & & & & & & & & & . \\
. & & & & & & & & & & & & & . \\
. & & & & & & & & & & & & & . \\
. & & & & & & & & & & & & & . \\
x_{i1} & . & . & . & . & . & . & . & x_{ij} & . & . & . & . & x_{in} \\
. & & & & & & & & & & & & & . \\
. & & & & & & & & & & & & & . \\
x_{m1} & . & . & . & . & . & . & . & . & . & . & . & . & x_{mn}
\end{pmatrix}
*
\begin{pmatrix}
a & b & c & d \\
e & & & \\
f & g & h & i \\
j & & & \\
k & l & m & n
\end{pmatrix}
=
\begin{pmatrix}
M_{11} & M_{12} & M_{13} & M_{14} & . & . & . & . & . & M_{1l} & . & . & . & . & . & M_{1q} \\
M_{21} & & & & & & & & & & & & & & & . \\
M_{31} & & & & & & & & & & & & & & & . \\
. & & & & & & & & & & & & & & & . \\
. & & & & & & & & & & & & & & & . \\
. & & & & & & & & & & & & & & & . \\
M_{k1} & . & . & . & . & . & . & . & M_{kl} & . & . & . & . & . & M_{kq} \\
. & & & & & & & & & & & & & & & . \\
. & & & & & & & & & & & & & & & . \\
. & & & & & & & & & & & & & & & . \\
. & & & & & & & & & & & & & & & . \\
M_{p1} & . & . & . & . & . & . & . & . & . & . & . & . & . & M_{pq}
\end{pmatrix}
$$

Dimensions m x n        h x h        (m+h) x (n+h)

Nota bene : les matrices ne sont pas obligatoirement carrées. Les dimensions du pinceau peuvent être quelconques. Un pinceau de dimension 1 sera l'équivalent d'un balayage par un faisceau très fin et la matrice des mesures sera directement l'image de l'objet.

On comprend ainsi que, sur un même objet, on peut faire un premier balayage grossier, avec un pas de mesure agrandi, par exemple égal à h pas élémentaires selon au moins une direction (avec un traitement indiqué au paragraphe précédent pour le pinceau de dimension égale au pas élémentaire), puis un balayage fin en scrutant l'objet avec le pas minimal, c'est-à-dire le pas élémentaire.

L'objet X peut être reconstruit par plusieurs méthodes mathématiques à partir des matrices des mesures M et du pinceau H. Cette reconstruction peut se faire par l'utilisation d'un algorithme, d'une méthode d'inversion matricielle ou encore en mettant à profit les propriétés des transformées de Fourier.

$$f * g = \mathsf{F}^{-1}[\mathsf{F}(f).\mathsf{F}(g)]$$

F transformation de Fourier,
F $^{-1}$ transformation de Fourier inverse

Pour retrouver l'objet X à partir de la mesure M et du pinceau H en utilisant les transformations de Fourier :

$$X = \mathsf{F}^{-1}[\mathsf{F}(M)/\mathsf{F}(H)]$$

division terme à terme

On notera que la méthode de reconstruction de l'image ne fait appel à aucune dimension source / objet / détecteurs. L'image est nette partout.

Des corrections peuvent être apportées à l'image reconstruite (elles sont à la portée de l'homme de métier) :

- en principe, la source doit émettre une quantité constante de rayonnement par unité de temps pendant la durée du balayage. Si ce n'est pas le cas une correction des mesures peut se faire à partir d'un monitoring de la source,
- la distribution spatiale de l'intensité du rayonnement émis par la source à l'intérieur de la zone d'analyse peut ne pas être uniforme. Par exemple, la source peut présenter un lobe d'émission. Cette non-uniformité pourra faire l'objet de correction de l'image reconstruite à condition d'en avoir réalisé une mesure préalable,
- la géométrie du système mécanique est telle que la projection du pinceau de rayonnement est régulière sur une calotte sphérique. L'image de l'objet étant reconstruite dans un plan, il est possible d'effectuer les corrections géométriques lors de la reconstruction de l'image afin de tenir compte de cette distorsion, Un éventuel flou des images prises entre deux pas de mesure, s'il n'y a pas un arrêt complet du moteur considéré, peut être corrigé au moyen d'un traitement connu en soi dans le domaine de la tomographie.

Afin d'améliorer le rapport signal à bruit de l'image reconstruite, il est possible d'ajouter d'autres détecteurs monoblocs (positionnés en dehors de la zone d'émission du modulateur) qui vont recueillir simultanément les rayonnements diffusés atteignant chacun d'entre eux lors du balayage. La position de ces détecteurs n'intervient pas dans la reconstruction de l'image, leur mise en place est donc très rapide et ne nécessite pas de réglages fastidieux. L'intérêt d'utiliser plusieurs détecteurs et leur disposition judicieuse est aussi de limiter les zones d'ombres dues au masquage des différentes partie de l'objet inspecté les unes par les autres. Enfin cette disposition, par reconstruction des images individuelles issues de chaque détecteur et par combinaison entre elles, donne accès à la profondeur de l'objet inspecté en utilisant les principes mis en oeuvre dans les techniques de photogrammétrie.

La figure 4 représente un dispositif complet d'imagerie rétrodiffusée et transmise avec un modulateur M (incluant une source de rayonnements) qui génère un pinceau de rayonnement adapté à être déplacé suivant deux directions, plusieurs détecteurs monoblocs 17A, 17B, 17C et 17D mesurant le rayonnement diffusé par l'objet 20, un détecteur monobloc 15 mesurant le rayonnement transmis à travers l'objet, une électronique 30 d'acquisition des signaux des détecteurs précités, et un système 31 de commande et de contrôle qui pilote les moteurs pas à pas 12 et 13 du modulateur, synchronise les détecteurs avec les moteurs, et traite les signaux pour reconstruire les images rétrodiffusée et transmise.

Un intérêt de choisir des valeurs N1 et N2 égales à des entiers impairs est que, lors de chaque mesure, le pinceau est centré sur un pixel donné. C'est un tel cas qui est envisagé ci-dessus, qui a l'avantage d'une certaine symétrie des matrices ; mais le cas de valeurs paires est tout aussi possible, en modifiant les matrices indiquées ci-dessus.

Lorsqu'on veut pouvoir effectuer un balayage avec plusieurs pas de mesure différents, il a été indiqué qu'il y a au moins la possibilité de faire un balayage grossier avec un pas de mesure égal à l'amplitude angulaire du pinceau suivant la direction considérée (c'est-à-dire égal à N1 ou N2 fois le pas élémentaire).

Lorsqu'on souhaite pouvoir effectuer en outre un balayage avec un pas de mesure intermédiaire, il est recommandé que ce pas de mesure intermédiaire soit aussi un sous-multiple de l'amplitude angulaire du pinceau, ce qui veut dire que les entiers N1 et N2 sont avantageusement des nombres qui ne sont pas premiers, mais des produits d'entiers plus petits. On comprend que si N1 et N2 (dont il a été dit qu'il y a un avantage qu'ils soient égaux) sont des produits d'entiers différents, chacun de ces entiers permet donc un balayage à pas de mesure intermédiaire tout en suivant des calculs facilement déduits de ceux indiqués ci-dessus ; à titre d'exemple, des valeurs N1=N2=5 permettent des balayages aux pas de mesure de 5 (balayage grossier) et de 1 (balayage fin), et des valeurs N1=N2=15 permettent des balayages aux pas de mesure de 15 (balayage très grossier), de 5 et de 3 (balayages intermédiaires) et de 1 (balayage fin).

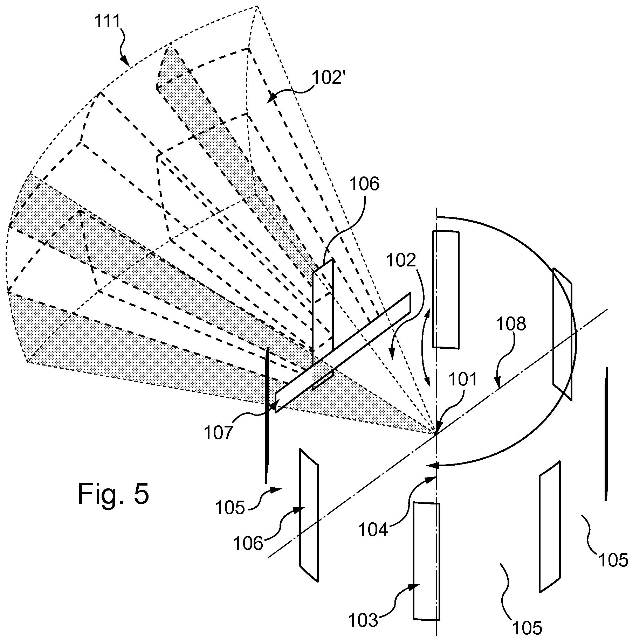

La figure 5 représente une variante de réalisation d'un modulateur conforme à l'invention, se distinguant de la configuration de la figure 1 par le fait qu'on augmente très significativement la largeur des fentes faites dans les cylindres au point d'inverser les parties pleines et vides de la couronne et de la portion de cylindre du modulateur M. Les éléments analogues à ceux de la figure 1 sont désignés par des signes de référence se déduisant de ceux de cette figure 1 par augmentation du nombre 100 ; ainsi le centre est noté 101, les axes de rotation 104 et 108 ; toutefois, la portion de cylindre se limite à une simple partie pleine 107, de largeur similaire à celles des parties pleines 106 alternant avec des espaces 105 au sein de la couronne cylindrique 103. Par analogie avec ce qui précède, la portion de couronne 106, qui est opaque au rayonnement, est délimitée par deux portions 105 transparentes au rayonnement ayant chacune une amplitude angulaire au minimum égale au secteur d'éclairage 102 délimité par l'élément de collimation autour du premier axe ; de même, la portion 107 opaque au rayonnement est délimitée par deux portions transparentes au rayonnement ayant chacune une amplitude annulaire au minimum égale au secteur d'éclairage 102 délimité par l'élément de collimation autour du second axe. Le pinceau de rayonnement occupe tout l'espace 102' délimité par le collimateur primaire avec une ombre 111 en forme de croix se déplaçant lors du balayage. Un tel modulateur peut être intégré à un dispositif d'imagerie rétrodiffusée et/ou transmise (dont les autres éléments sont similaires à celui décrit ci-dessus), la construction des images se faisant à partir de la baisse de rayonnement induite par le balayage de l'ombre provoquée par le croisement des parties pleines. Cette disposition utilise une plus grande part du rayonnement émis par la source et permet donc d'améliorer le rapport signal à bruit et/ou de raccourcir les durées d'acquisition.

## EXEMPLE DE REALISATION

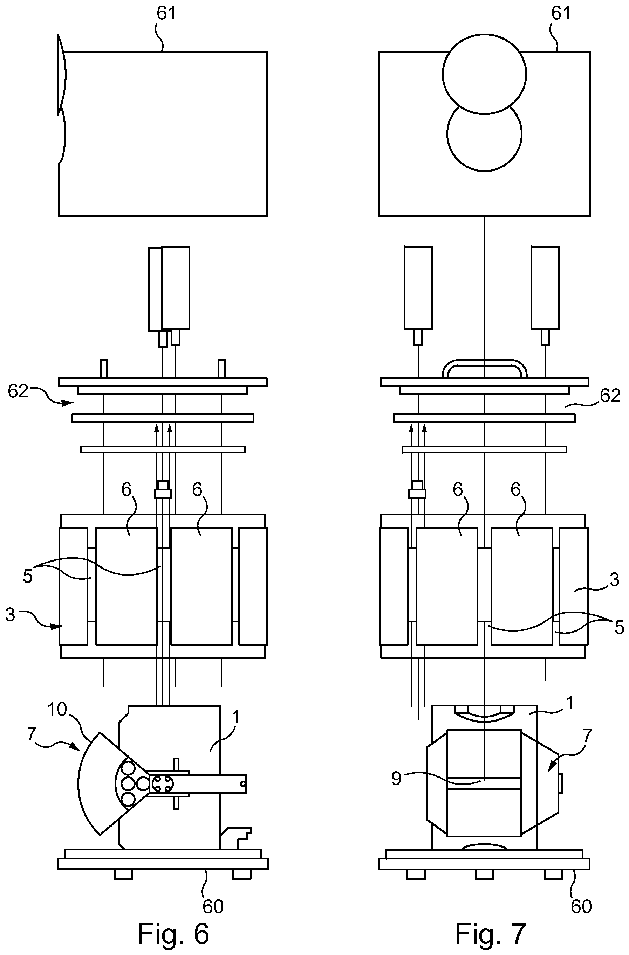

Les figures 6 et 7 montrent un modulateur de rayonnement réalisé pour une source de rayonnement X portable de 120 kV, 1mA continu du commerce (CP120 de la société ICM). Cette source 1 est en pratique contenue dans un corps cylindrique ; celui-ci est avantageusement amovible vis-à-vis du reste du modulateur.

La collimation primaire est en plomb. Elle délimite un cône de 36° dont le sommet est le point d'émission du générateur (champ éclairé de 65 cm de diamètre à 1m du centre de la source). Le collimateur n'est ici pas représenté en soi.

La couronne et la portion de cylindre sont munies de volets 6 et 10 en tantale de 3 mm d'épaisseur. Les parties pleines du premier cylindre couvrent un angle de 36°, les fentes 5 et 9 couvrent chacune 9°. Cette disposition conduit à huit fentes sur la couronne cylindrique. Le pinceau de rayonnement ainsi formé par le croisement des fentes verticale et horizontale couvre un carré de 9° x 9°, soit le seizième $(9°/36°)^2$ de la zone éclairée.

Deux moteurs pas à pas identiques (NEMA17, 0,9°) avec électronique intégrée de 200 pas par tour actionnent les deux pièces mobiles en rotation via des réducteurs de rapport 1/50. Cette configuration conduit à un déplacement des fentes de 0,036° par pas du moteur. La zone scrutée correspond ainsi à 1000 + 250 pas de moteur (36°/0,036 et 9°/ 0,036). Ceci permet de reconstruire une image de 1000 x 1000 pixels. Pour une distance source / objet de 1m, la dimension d'un pixel est de 0,65 x 0,65 mm.

Les moteurs sont configurables en pas élémentaires valant 1/2 pas, 1/4, 1/8 de pas, etc., ce qui permet l'acquisition d'images de plus grande taille donc de résolution plus petite (0,018° en mode 1/2 pas). Pour des images de moindre résolution, par exemple 500 x 500 (0,072°), deux impulsions successives sont appliquées aux moteurs pour faire avancer les fentes entre chaque acquisition de mesure (le pas de mesure vaut alors deux pas élémentaires).

Ces moteurs sont commandés par des cartes électroniques programmables qui fournissent les signaux de synchronisation des acquisitions et effectuent également le comptage des impulsions délivrées par les détecteurs entre deux positions successives des fentes.

De même que dans la figure 1, la portion de cylindre 7 est située à l'intérieur du volume de la couronne cylindrique. On comprend toutefois que, en variante, cette portion de cylindre peut être située à l'extérieur de cette couronne cylindrique.

L'ensemble est intégré à l'intérieur d'un boîtier comportant un support 60, une paroi latérale 61 et des éléments de couverture 62.

A titre d'exemple, le diamètre de la couronne est de 320 mm pour une hauteur de 270 mm, ce qui correspond à un dispositif de balayage suivant deux directions particulièrement compact.

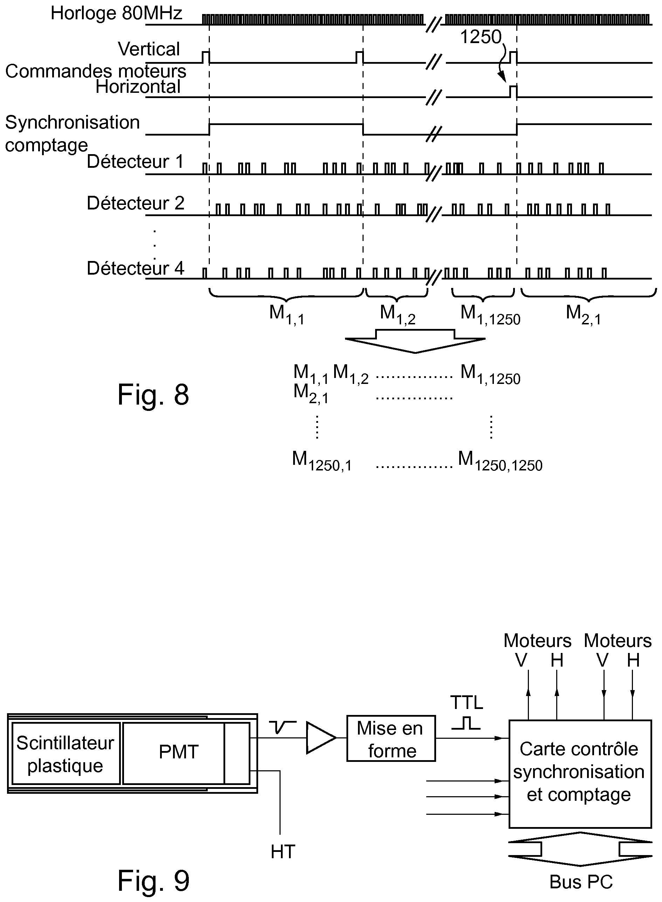

La figure 8 est un chronogramme du fonctionnement d'un tel modulateur intégré à un dispositif d'imagerie comportant 4 détecteurs.

A partir d'un signal d'horloge, ici de 80MHz, des impulsions du moteur vertical (c'est-à-dire du moteur qui provoque la rotation de la couronne autour de l'axe vertical) déclenchent des pas de rotation de la couronne ; par contre, une impulsion est appliquée au moteur horizontal (c'est-à-dire au moteur qui provoque la rotation de la portion de cylindre autour de l'axe horizontal) après un nombre d'impulsions du moteur vertical correspondant à un balayage complet suivant une ligne (ici sur 1250 pas).

Un signal de synchronisation alterne d'une étape d'acquisition à l'autre : les mesures faites après chaque mouvement du moteur vertical correspondent aux valeurs indiquées ci-dessus à propos du calcul matriciel permettant de reconstruire l'image de l'objet analysé.

L'acquisition d'une image de 1000 x 1000 pixels d'un objet situé à 1 m de la source s'effectue en 15 mn. Ceci correspond à des intervalles de comptage de 576 µs et une vitesse de rotation de la couronne de 10,4 tours par minutes. Une image de 200 x 200 pixels avec le même rapport signal à bruit est réalisée en 1 mn. Ces temps d'acquisition peuvent encore être réduits en augmentant le nombre de détecteurs, la taille des scintillateurs et en utilisant des cartes de comptage plus rapides. En effet, plus il y a de photons par pixel, plus il faut pouvoir les compter vite.

La figure 9 représente un exemple de chaîne de comptage pour l'acquisition des mesures ; cette chaîne comporte un scintillateur plastique rapide (les dimensions typiques sont un diamètre de 50 millimètres pour une hauteur de 50 millimètres) couplé à un photomultiplicateur (PMT) : le signal de sortie est mis en forme au format TTL et est appliqué à une carte de contrôle de synchronisation et de comptage générant des signaux de commande pour les moteurs.

Il est à noter que si, pour une opération d'analyse donnée, on choisit de n'utiliser les dispositifs de commande qu'avec des pas minima qui sont des multiples des pas élémentaires, les commentaires formulés ci-dessus à propos des pas élémentaires s'appliquent aux pas minima ; en d'autres termes, la notion de pas élémentaire utilisée ci-dessus peut être modifiée en fonction des besoins, avec une même configuration structurelle.

Le système est notamment destiné à inspecter des objets de la vie courante (valise, sac, emballage carton, etc.) dont la taille conditionne l'ouverture du collimateur primaire de la source de rayonnement. Une zone éclairée de l'ordre de 50 cm semble être un minimum. En plaçant le générateur à 1 m de l'objet, ceci conduit à une ouverture angulaire minimale du collimateur de l'ordre de 30°.

Une ouverture maximale raisonnable est ≤ 90°, ce qui conduit à un champ éclairé de 2 m à 1 m de distance ; au-delà, l'éclairement sur les bords est inférieur à 40% par rapport au centre (lobe du générateur de rayonnement ayant une source ponctuelle).

Le principe d'imagerie utilisé (à la fig. 1) implique qu'à un moment du cycle l'objet ne soit pas éclairé. Les parties pleines du modulateur doivent donc couvrir l'ouverture du collimateur. Ceci donne un domaine avantageusement compris entre environ 30 et 90° pour les parties pleines.

Les fentes entre les parties pleines doivent permettre le passage d'une partie significative du rayonnement.

Une ouverture minimale de l'ordre de 10° (champ de 17 cm à 1m) est souhaitable. L'ouverture maximale sera au plus égale à l'ouverture de la collimation. En effet une ouverture plus grande conduit à acquérir plus d'information que nécessaire pour reconstruire l'image. Une grande largeur de fente implique une plus grande quantité de mesures à acquérir et donc un temps de scrutation plus long (pour reconstruire une image m x n, il faut (m+h) x (n+h) mesures avec h la largeur du faisceau). Si les fentes ont la même largeur que les parties pleines, il faudra acquérir 4 fois le nombre de pixels de l'image que l'on souhaite reconstruire. De façon pratique, on peut avantageusement limiter l'ouverture des fentes à la moitié de l'ouverture des parties pleines pour réduire le nombre d'acquisitions (2,25 fois la taille de l'image).

Ceci amène à choisir de préférence un domaine compris entre environ 10 et 45° pour les fentes.

Le premier choix à faire est la taille du champ à scruter. Ceci impose l'ouverture des parties pleines. L'ouverture des fentes découle de ce qui vient d'être décrit (à savoir une ouverture>10° et < ½ de la partie pleine). La répartition régulière de ces parties pleines et fentes, dans la limite des ouvertures prédéfinies, sur un cylindre va fixer les valeurs possibles pour ces mêmes ouvertures.

La mise en oeuvre d'une portion de cylindre laisse un plus grand choix d'ouvertures possibles.

Exemples de valeurs de couples d'ouvertures pour une répartition sur un cylindre : tous les couples pour lesquels 360/(Fente+Plein) = entier fonctionnent avec $\approx$30°$\leq$ plein $\leq$ 90° et $\approx$10° $\leq$ fente $\leq$ ½ plein.

| Fente (°) | Partie pleine (°) | N motifs sur un cylindre | Champ éclairé à 1 m (m) |
|---|---|---|---|
| 9 | 27 | 10 | 0.48 |
| 10 | 30 | 9 | 0.54 |
| 9.3 | 30.7 | 9 | 0.55 |
| 15 | 30 | 8 | 0.54 |
| 15 | 45 | 6 | 0.83 |
| 30 | 60 | 4 | 1.15 |
| 18 | 72 | 4 | 1.45 |
| 30 | 90 | 3 | 2.00 |

## Revendications

1.  Dispositif d'éclairage par balayage comportant une source d'éclairage définissant un centre d'émission (1), un élément de collimation délimitant un secteur d'éclairage (2) à partir du centre dans lequel le rayonnement émis est sensiblement homogène, au moins une portion de couronne cylindrique (3) centrée sur la source et mobile en rotation autour d'un premier axe (4) passant par le centre d'émission, cette portion de couronne cylindrique comportant une fente (5) ayant une amplitude angulaire $\alpha$ entourée de deux portions opaques au rayonnement (6) ayant chacune une amplitude angulaire au minimum égale à celle du secteur d'éclairage (2) délimité par l'élément de collimation, une portion de cylindre (7) centrée sur la source (1) et mobile en rotation, à l'intérieur d'un débattement donné, autour d'un second axe (8) passant par le centre d'émission en formant un angle non nul par rapport au premier axe, cette portion de cylindre comportant une fente (9) parallèle au second axe de rotation ayant une amplitude angulaire $\beta$ entourée de deux portions opaques au rayonnement ayant chacune une amplitude angulaire au minimum égale à celle du secteur d'éclairage (2) délimité par l'élément de collimation, un premier dispositif (12) de commande pas à pas de la rotation de la portion de couronne cylindrique définissant un pas angulaire élémentaire $\alpha\alpha$ qui est un sous-multiple de l'amplitude angulaire élémentaire $\alpha$ tel qu'il existe un entier N1 différent de 1 respectant la condition $\alpha$=N1.$\alpha\alpha$, et un dispositif (13) de commande pas à pas de la rotation de la portion de couronne définissant un pas angulaire élémentaire $\beta\beta$ qui est un sous-multiple de l'amplitude $\beta$ de la fente de cette portion de cylindre tel qu'il existe un entier N2 différent de 1 respectant la condition $\beta$=N2.$\beta\beta$.

2.  Dispositif selon la revendication 1, dans lequel la portion de couronne cylindrique (3) est une couronne cylindrique comportant une pluralité de fentes (5) ayant ladite amplitude angulaire $\alpha$ et régulièrement réparties autour de son axe de rotation et le premier dispositif de commande pas à pas (12) est conçu pour pouvoir commander cette couronne dans un même sens de rotation.

3.  Dispositif d'éclairage par balayage comportant une source d'éclairage définissant un centre d'émission (101), un élément de collimation délimitant un secteur d'éclairage (102) à partir du centre dans lequel le rayonnement émis est sensiblement homogène, au moins une portion de couronne cylindrique (103) centrée sur la source et mobile en rotation autour d'un premier axe (104) passant par le centre d'émission, cette portion de couronne cylindrique comportant une portion (106) opaque au rayonnement en ayant une amplitude angulaire $\alpha$ entourée de deux portions transparentes au rayonnement (105) ayant chacune une amplitude angulaire au minimum égale à celle du secteur d'éclairage (102) délimité par l'élément de collimation, une portion de cylindre centrée sur la source et mobile en rotation, à l'intérieur d'un débattement donné, autour d'un second axe passant par le centre d'émission en formant un angle non nul par rapport au premier axe, cette portion de cylindre comportant une portion (107) opaque au rayonnement qui est parallèle au second axe de rotation ayant une amplitude angulaire $\beta$ entourée de deux portions transparentes au rayonnement ayant chacune une amplitude angulaire au minimum égale à celle du secteur d'éclairage (102) délimité par l'élément de collimation, un premier dispositif de commande pas à pas de la rotation de la portion de couronne cylindrique définissant un pas angulaire élémentaire $\alpha\alpha$ qui est un sous-multiple de l'amplitude angulaire $\alpha$ tel qu'il existe un entier N1 différent de 1 respectant la condition $\alpha=N1.\alpha\alpha$, et un dispositif de commande pas à pas de la rotation de la portion de couronne définissant un pas angulaire élémentaire $\beta\beta$ qui est un sous-multiple de l'amplitude $\beta$ tel qu'il existe un entier N2 différent de 1 respectant la condition $\beta=N2.\beta\beta$.

4. Dispositif selon la revendication 3, dans lequel la portion de couronne cylindrique (103) est une couronne cylindrique comportant une pluralité de fentes régulièrement réparties autour de son axe de rotation en étant séparées par des portions opaques (106) ayant ladite amplitude angulaire $\alpha$ et le premier dispositif de commande pas à pas est conçu pour pouvoir commander cette couronne cylindrique dans un même sens de rotation.

5. Dispositif selon la revendication 2 ou la revendication 4, dans lequel les amplitudes angulaires $\alpha$ et $\beta$ sont égales et les entiers N1 et N2 sont égaux.

6. Dispositif selon l'une quelconque des revendications 2, 4 ou 5, dans lequel les fentes sont en un nombre compris entre 5 et 10.

7. Dispositif selon l'une quelconque des revendications 1 à 6, contenu dans un boîtier de dimensions inférieures à 50 x 50 x 50 cm3.

8. Dispositif d'imagerie par balayage comportant un dispositif d'éclairage (M) selon l'une quelconque des revendications 1 à 7, comportant en outre une zone de réception (20) dont le volume est destiné à recevoir un objet à imager, et au moins un détecteur monobloc (15, 17A, 17B, 17C, 17D) positionné par rapport à cette zone de réception en sorte que son champ de vue puisse détecter un rayonnement rétrodiffusé ou transmis par un tel objet soumis dans cette zone à un balayage par un faisceau de balayage émis par le dispositif d'éclairage, en étant synchronisé avec les dispositifs de commande pas à pas du dispositif d'éclairage de manière à effectuer des opérations de détection entre des pas de mesure successifs de ces dispositifs de commande et fournir une mesure de rayonnement reçu dans son champ de vue pour chaque position du faisceau de balayage commandée par ces dispositifs de commande pas à pas, ces pas de mesure valant un ou plusieurs pas élémentaires.

9. Dispositif d'imagerie selon la revendication 8, dans lequel le détecteur monobloc est conçu pour pouvoir fournir des mesures de rayonnement pour des positions des portions de cylindre dans lesquelles des zones de celles-ci ayant ladite amplitude $\alpha$ ou $\beta$ n'interceptent qu'au plus une partie du secteur d'éclairage du dispositif d'éclairage.

10. Dispositif d'imagerie selon la revendication 8, comportant au moins un détecteur de rayonnement diffusé et au moins un détecteur de rayonnement transmis.

11. Procédé de formation d'une image d'un objet situé en une zone de réception, selon lequel

   a. On soumet l'objet à un balayage par un faisceau d'éclairage émis par un dispositif d'éclairage selon l'une quelconque des revendications 1 à 8, pas de mesure par pas de mesure suivant chaque direction de balayage, chaque pas de mesure d'un des dispositifs de commande de ce dispositif d'éclairage valant un ou plusieurs pas élémentaires de ce dispositif de commande,
   b. On acquiert, après chaque pas de mesure d'un des dispositifs de commande de ce dispositif d'éclairage, une mesure de la quantité de rayonnement diffusé et/ou transmis par l'objet soumis au faisceau d'éclairage à cet instant et on stocke cette mesure dans une matrice dont les lignes et les colonnes correspondent à des positions respectives des dispositifs de commande du dispositif d'éclairage,
   c. Puis on reconstruit l'image de l'objet par déconvolution de ladite matrice contenant lesdites mesures par une matrice représentative du faisceau d'éclairage.

**12.** Procédé selon la revendication 11 selon lequel on soumet d'abord l'objet à un balayage par un faisceau d'éclairage émis par le dispositif d'éclairage suivant un pas de mesure valant un nombre de pas élémentaires supérieur à 1 pour l'un au moins des dispositifs de commande pas à pas, on sélectionne, au sein de la zone de réception, une partie de l'objet à analyser et on applique les étapes a à c à cette partie seulement avec un pas de mesure égal audit pas élémentaire.

**Patentansprüche**

**1.** Vorrichtung zur Beleuchtung durch Abtastung, umfassend eine Beleuchtungsquelle, die einen Emissionsmittelpunkt (1) definiert, ein Kollimationselement, das einen Beleuchtungssektor (2) ausgehend von dem Mittelpunkt begrenzt, in welchem die emittierte Strahlung im Wesentlichen homogen ist, zumindest einen zylindrischen Ringabschnitt (3), der auf die Quelle zentriert ist und um eine erste Achse (4) drehbar ist, die durch den Emissionsmittelpunkt verläuft, wobei dieser zylindrische Ringabschnitt einen Schlitz (5) mit einer Winkelamplitude $\alpha$ aufweist, der von zwei strahlungsundurchlässigen Abschnitten (6) umgeben ist, die jeweils eine Winkelamplitude aufweisen, die mindestens gleich der des Beleuchtungssektors (2) ist, der von dem Kollimationselement begrenzt wird, einen Zylinderabschnitt (7), der auf die Quelle (1) zentriert ist und innerhalb einer gegebenen Ablenkung um eine zweite Achse (8) drehbar ist, die durch den Emissionsmittelpunkt verläuft und dabei einen Winkel ungleich null bezüglich der ersten Achse einschließt, wobei dieser Zylinderabschnitt einen Schlitz (9) parallel zu der zweiten Drehachse mit einer Winkelamplitude $\beta$ aufweist, der von zwei strahlungsundurchlässigen Abschnitten umgeben ist, die jeweils eine Winkelamplitude aufweisen, die mindestens gleich der des durch das Kollimationselement begrenzten Beleuchtungssektors (2) ist, eine erste Vorrichtung (12) zur schrittweisen Steuerung der Drehung des zylindrischen Ringabschnitts, die einen Einzelwinkelschritt $\alpha\alpha$ definiert, der ein Teiler der Einzelwinkelamplitude $\alpha$ ist, so dass es eine von 1 abweichende ganze Zahl N1 gibt, die die Bedingung $\alpha = N1.\alpha\alpha$ erfüllt, sowie eine Vorrichtung (13) zum schrittweisen Steuern der Drehung des Ringabschnitts, die einen Einzelwinkelschritt $\beta\beta$ definiert, der ein Teiler der Amplitude $\beta$ des Schlitzes dieses Zylinderabschnitts ist, so dass es eine von 1 abweichende ganze Zahl N2 gibt, die die Bedingung $\beta = N2.\beta\beta$ erfüllt.

**2.** Vorrichtung nach Anspruch 1, wobei der zylindrische Ringabschnitt (3) ein zylindrischer Ring mit einer Mehrzahl von Schlitzen (5) ist, die die Winkelamplitude $\alpha$ haben und gleichmäßig um seine Drehachse verteilt sind und die erste Vorrichtung zum schrittweisen Steuern (12) dazu ausgelegt ist, diesen Ring in einer gleichen Drehrichtung steuern zu können.

**3.** Vorrichtung zur Beleuchtung durch Abtastung, umfassend eine Beleuchtungsquelle, die einen Emissionsmittelpunkt (101) definiert, ein Kollimationselement, das einen Beleuchtungssektor (102) ausgehend von dem Mittelpunkt begrenzt, in welchem die emittierte Strahlung im Wesentlichen homogen ist, zumindest einen zylindrischen Ringabschnitt (103), der auf die Quelle zentriert ist und um eine erste Achse (104) drehbar ist, die durch den Emissionsmittelpunkt verläuft, wobei dieser zylindrische Ringabschnitt einen strahlungsundurchlässigen Abschnitt (106) enthält, der eine Winkelamplitude $\alpha$ aufweist und von zwei strahlungsdurchlässigen Abschnitten (105) umgeben ist, die jeweils eine Winkelamplitude mindestens gleich der des Beleuchtungssektors (102) haben, der von dem Kollimationselement begrenzt wird, einen Zylinderabschnitt, der auf die Quelle zentriert ist und innerhalb einer gegebenen Ablenkung um eine zweite Achse drehbar ist, die durch den Emissionsmittelpunkt verläuft und dabei einen Winkel ungleich null bezüglich der ersten Achse einschließt, wobei dieser Zylinderabschnitt einen strahlungsundurchlässigen Abschnitt (107) aufweist, der parallel zu der zweiten Drehachse mit einer Winkelamplitude $\beta$ verläuft und von zwei strahlungsdurchlässigen Abschnitten umgeben ist, die jeweils eine Winkelamplitude aufweisen, die mindestens gleich der des durch das Kollimationselement begrenzten Beleuchtungssektors (102) ist, eine erste Vorrichtung zum schrittweisen Steuern der Drehung des zylindrischen Ringabschnitts, die einen Einzelwinkelschritt $\alpha\alpha$ definiert, der ein Teiler der Winkelamplitude $\alpha$ ist, so dass es eine von 1 abweichende ganze Zahl N1 gibt, die die Bedingung $\alpha = N1.\alpha\alpha$ erfüllt, sowie eine Vorrichtung zum schrittweisen Steuern der Drehung des Ringabschnitts, die einen Einzelwinkelschritt $\beta\beta$ definiert, der ein Teiler der Amplitude $\beta$ ist, so dass es eine von 1 abweichende ganze Zahl N2 gibt, die die Bedingung $\beta = N2.\beta\beta$ erfüllt.

**4.** Vorrichtung nach Anspruch 3, wobei der zylindrische Ringabschnitt (103) ein zylindrischer Ring mit einer Mehrzahl von Schlitzen ist, die gleichmäßig um seine Drehachse verteilt sind und dabei durch strahlungsundurchlässige Abschnitte (106) mit der Winkelamplitude $\alpha$ getrennt sind, und die erste Vorrichtung zum schrittweisen Steuern dazu ausgelegt ist, diesen zylindrischen Ring in einer gleichen Drehrichtung steuern zu können.

**5.** Vorrichtung nach Anspruch 2 oder Anspruch 4, wobei die Winkelamplituden $\alpha$ und $\beta$ gleich sind und die ganzen Zahlen N1 und N2 gleich sind.

6. Vorrichtung nach einem der Ansprüche 2, 4 oder 5, wobei die Schlitze in einer Anzahl zwischen 5 und 10 vorliegen.

7. Vorrichtung nach einem der Ansprüche 1 bis 6, enthalten in einem Gehäuse mit Abmessungen unter $50 \times 50 \times 50 \, cm^3$.

8. Vorrichtung zur Bildgebung durch Abtastung, umfassend eine Beleuchtungsvorrichtung (M) nach einem der Ansprüche 1 bis 7, ferner umfassend einen Aufnahmebereich (20), dessen Volumen dazu bestimmt ist, ein abzubildendes Objekt aufzunehmen, sowie zumindest einen einstückigen Sensor (15, 17A, 17B, 17C, 17D), der so bezüglich dieses Aufnahmebereichs positioniert ist, dass sein Blickfeld eine Strahlung erfassen kann, die von einem Objekt rückgestreut bzw. übertragen wird, das in diesem Bereich einer Abtastung durch einen von der Beleuchtungsvorrichtung emittierten Abtaststrahl unterzogen wird, wobei er mit den Vorrichtungen zum schrittweisen Steuern der Beleuchtungsvorrichtung synchronisiert ist, so dass Erfassungsvorgänge zwischen aufeinanderfolgenden Messschritten dieser Steuervorrichtungen erfolgen und eine Messung der in seinem Blickfeld empfangenen Strahlung für jede Position des Abtaststrahls bereitgestellt wird, die über diese Vorrichtungen zum schrittweisen Steuern gesteuert wird, wobei diese Messschritte einen oder mehrere Einzelschritte ausmachen.

9. Abbildungsvorrichtung nach Anspruch 8, wobei der einstückige Sensor dazu ausgelegt ist, Strahlungsmessungen für Positionen der Zylinderabschnitte bereitstellen zu können, in denen die Bereiche derselben mit der Amplitude α oder β nur höchstens einen Teil des Beleuchtungssektors der Beleuchtungsvorrichtung schneiden.

10. Abbildungsvorrichtung nach Anspruch 8, umfassend zumindest einen Sensor für rückgestreute Strahlung und zumindest einen Sensor für übertragene Strahlung.

11. Verfahren zum Bilden einer Abbildung eines in einem Aufnahmebereich befindlichen Objekts, wobei

a. das Objekt einer Abtastung durch einen von einer Beleuchtungsvorrichtung nach einem der Ansprüche 1 bis 8 emittierten Beleuchtungsstrahl unterzogen wird, und zwar Messschritt für Messschritt entlang jeder Abtastrichtung, wobei jeder Messschritt einer der Vorrichtungen zum Steuern dieser Beleuchtungsvorrichtung einen oder mehrere Einzelschritte dieser Steuervorrichtung ausmacht,

b. nach jedem Messschritt einer der Vorrichtungen zum Steuern dieser Beleuchtungsvorrichtung eine Messung der Strahlungsmenge der Strahlung aufgenommen wird, die von dem Objekt gestreut und/oder übertragen wird, das zu diesem Zeitpunkt dem Beleuchtungsstrahl unterzogen wird, und diese Messung in einer Matrix abgelegt wird, deren Zeilen und Spalten jeweiligen Positionen der Vorrichtungen zum Steuern der Beleuchtungsvorrichtung entsprechen,

c. dann die Abbildung des Objekts durch Dekonvolution der die Messungen enthaltenden Matrix mit einer für den Beleuchtungsstrahl repräsentativen Matrix wiederhergestellt wird.

12. Verfahren nach Anspruch 11, wobei das Objekt zunächst einer Abtastung durch einen von der Beleuchtungsvorrichtung emittierten Beleuchtungsstrahl gemäß einem Messschritt unterzogen wird, der eine Anzahl von Einzelschritten größer als 1 für die zumindest eine der Vorrichtungen zum schrittweisen Steuern ausmacht, innerhalb des Aufnahmebereichs ein Ausschnitt des zu analysierenden Objekts ausgewählt wird und die Verfahrensschritte a bis c nur auf diesen Ausschnitt mit einem Messschritt gleich dem Einzelschritt angewendet werden.

**Claims**

1. A scanning illuminating device comprising an illumination source defining an emission center (1), a collimation element delimiting a sector of illumination (2) from the center in which the emitted radiation is substantially homogenous, at least one cylindrical ring portion (3) centered on the source and rotatable about a first axis (4) passing through the emission center, that cylindrical ring portion comprising a slit (5) having an angular amplitude α surrounded by two portions opaque to radiation (6) each having an angular amplitude at minimum equal to that of the illumination sector (2) delimited by the collimation element, a cylinder portion (7) centered on the source (1) and rotatable, within a given travel, around a second axis (8) passing through the emission center and forming a non-zero angle relative to the first axis, that cylinder portion comprising a slit (9) parallel to the second rotational axis having an angular amplitude β surrounded by two portions opaque to the radiation each having an angular amplitude at minimum equal to that of the illumination sector (2) delimited by the collimation element, a first device (12) for stepwise actuation of the rotation of the cylindrical ring portion defining an elementary angular step αα which is a sub-multiple of the elementary angular amplitude $\alpha$ such that there is an integer N1 different from 1 meeting the condition $\alpha=N1.\alpha\alpha$, and a device (13) for stepwise actuation of the rotation of the ring portion defining an elementary angular step $\beta\beta$ which is a sub-multiple of the amplitude $\beta$ of the slit of that cylinder portion such that there is an integer N2 different from 1 meeting the condition $\beta=N2.\beta\beta$.

2. A device according to claim 1, wherein the cylindrical ring portion (3) is a cylindrical ring comprising a plurality of slits (5) having said angular amplitude $\alpha$ and which are regularly distributed around its rotational axis and the first stepwise actuation device (12) is designed to be able to actuate that ring in the same rotational direction.

3. A scanning illuminating device comprising an illumination source defining an emission center (101), a collimation element delimiting a sector of illumination (102) from the center in which the emitted radiation is substantially homogenous, at least one cylindrical ring portion (103) centered on the source and rotatable about a first axis (104) passing through the emission center, that cylindrical ring portion comprising a portion (106) opaque to the radiation and having an angular amplitude $\alpha$ surrounded by two portions (105) transparent to the radiation each having an angular amplitude at minimum equal to that of the illumination sector (102) delimited by the collimation element, a cylinder portion centered on the source and rotatable, within a given travel, around a second axis passing through the emission center and forming a non-zero angle relative to the first axis, that cylinder portion comprising a portion (107) opaque to the radiation which is parallel to the second rotational axis and has an angular amplitude $\beta$ surrounded by two portions transparent to the radiation each having an angular amplitude at minimum equal to that of the illumination sector (102) delimited by the collimation element, a first device for stepwise actuation of the rotation of the cylindrical ring portion defining an elementary angular step $\alpha\alpha$ which is a sub-multiple of the angular amplitude $\alpha$ such that there is an integer N1 different from 1 meeting the condition $\alpha=N1.\alpha\alpha$, and a device for stepwise actuation of the rotation of the cylindrical ring portion defining an elementary angular step $\beta\beta$ which is a sub-multiple of the amplitude $\beta$ such that there is an integer N2 different from 1 meeting the condition $\beta=N2.\beta\beta$.

4. A device according to claim 3, wherein the cylindrical ring portion (103) is a cylindrical ring comprising a plurality of slits regularly distributed around its rotational axis and separated by opaque portions (106) having said angular amplitude $\alpha$ and the first stepwise actuation device is designed to be able to actuate that cylindrical ring in the same rotational direction.

5. A device according to claim 2 or claim 4 wherein the angular amplitudes $\alpha$ and $\beta$ are equal to each other and the integers N1 and N2 are equal.

6. A device according to any one of claims 2, 4 or 5, wherein the number of slits is comprised between 5 and 10.

7. A device according to any one of claims 1 to 6, contained in a casing of dimensions less than 50 x 50 x 50 cm3.

8. A scanning imaging device comprising an illuminating device (M) according to any one of claims 1 to 7, further comprising a reception zone (20) of which the volume is configured to receive an object to image, and at least one unitary detector (15, 17A, 17B, 17C, 17D) positioned relative to that reception zone such that its field of view can detect radiation backscattered or transmitted by such an object subjected in that zone to scanning by a scanning beam emitted by the illuminating device, while being synchronized with the stepwise actuation devices of the illuminating device so as to perform detection operations between successive measurement steps of those actuation devices and provide a measurement of radiation received in its field of view for each position of the scanning beam actuated by those stepwise actuation devices, those measurement steps having the value of one or more elementary steps.

9. An imaging device according to claim 8, wherein the unitary detector is designed to be able to supply radiation measurements for positions of the cylinder portions in which the zones of those portions having said amplitude $\alpha$ or $\beta$ intercept at most only part of the illumination sector of the illuminating device.

10. An imaging device according to claim 8, comprising at least one detector of scattered radiation and at least one detector of transmitted radiation.

11. A method of forming an image of an object situated in a reception zone, wherein

a. The object is subjected to scanning by an illumination beam emitted by an illuminating device according to any one of claims 1 to 8, measurement step by measurement step in each scanning direction, each measurement step of one of the actuation devices of that illuminating device having the value of one or more elementary steps of that actuation device,

b. After each measurement step of one of the actuation devices of that illuminating device, a measurement is acquired of the quantity of radiation scattered and/or transmitted by the object subjected to the illumination beam at that time and that measurement is stored in a matrix of which the rows and the columns correspond to respective positions of the actuation devices of the illuminating device,

c. Next the image of the object is reconstructed by deconvolution of said matrix containing said measurements by a matrix representing the illumination beam.

12. A method according to claim 11, wherein the object is first subjected to scanning by an illumination beam emitted by the illuminating device with a measurement step equal to a number of elementary steps greater than 1 for at least one of the stepwise actuation devices, part of the object to analyze is selected within the reception zone and steps a to c are applied to that part only with a measurement step equal to said elementary step.

Fig. 1

Fig. 2

Fig. 3

Fig. 4

Fig. 5

Fig. 6

Fig. 7

Horloge 80MHz

Vertical

Commandes moteurs

Horizontal

1250

Synchronisation
comptage

Détecteur 1

Détecteur 2

Détecteur 4

$M_{1,1}$  $M_{1,2}$  $M_{1,1250}$  $M_{2,1}$

$M_{1,1}$ $M_{1,2}$ ............... $M_{1,1250}$
$M_{2,1}$          ...............

$M_{1250,1}$    ............... $M_{1250,1250}$

## Fig. 8

Moteurs  Moteurs
V  H  V  H

Scintillateur
plastique

PMT

Mise en
forme

TTL

Carte contrôle
synchronisation
et comptage

HT

Bus PC

## Fig. 9

## RÉFÉRENCES CITÉES DANS LA DESCRIPTION

**Documents brevets cités dans la description**

- US 4389633 A, Fenimore
- WO 9745755 A
- WO 0213517 A
- WO 02056055 A
- US 2004218714 A
- WO 2007091038 A
- WO 2007015784 A
- US 5764683 A
- WO 0033060 A
- WO 0194984 A
- WO 2004043740 A
- WO 2006102274 A
- US RE28544 E
- US 4031545 A
- US 4799247 A
- US 5179581 A
- US 5181234 A
- US 6094472 A
- US 6434219 B
- WO 9820366 A
- WO 9939189 A
- WO 2008021807 A
- WO 0194894 A
- WO 2008127385 A
- US 6950495 B

**Littérature non-brevet citée dans la description**

- **E. FENIMORE ; T.M. CANNON.** Coded aperture imaging with uniformely redundant arrays. *AppliedOptics,* 01 Février 1978, vol. 17 (3), 337-347